# EUROPEAN PATENT APPLICATION

(11) **EP 4 667 211 A1**
(43) Date of publication of application: **24.12.2025**
(21) Application number: 24201763.0
(22) Date of filing: 20.09.2024
(51) Int. Cl.: B32B 1/08, B32B 7/12, B32B 27/08, B32B 27/30, B32B 27/32, B32B 27/34

(54) **A LAMITUBE SLEEVE AND IMPLEMENTATIONS THEREOF**

(30) Priority: 20.06.2024 IN 202421047630
(71) Applicant: EPL Limited, Mumbai 400013 (IN)
(72) Inventor: NAIR, Hariharan Krishnan, 400067 MUMBAI (IN)
(74) Representative: Regimbeau

(57) **Abstract**

The present disclosure provides a lamitube sleeve comprising a) an outer layer and a sealant layer independently comprising at least one nucleated high density polyethylene; and b) a barrier layer disposed between the outer layer and the sealant layer, wherein the lamitube sleeve has a tensile strength @yield of at least 22 MPa. The present disclosure also provides a process of preparing the lamitube sleeve.

## Description

### FIELD OF INVENTION

The present disclosure relates to packaging materials. In particular, the present disclosure relates to lamitube sleeve comprising nucleated polyethylene and process of preparing thereof.

### BACKGROUND OF THE INVENTION

The packaging industry has emerged as one of the fastest growing sectors in the world economy. Ease of manufacture of plastics, coupled with its wide functionality has made plastics a widely accepted packaging material. However, there are growing concerns related to environmental and ecological sustainability in the use of such plastics. Accordingly, the concept of reduce, reuse and recycle is the guiding principle to minimize the growing environmental concerns.

Reduce is an essential guideline since it eliminates the source of plastics even before its availability for reuse and recycle. Reduce would necessarily be decreasing the amount of the plastics used in packaging material without compromising its functional aspects. Thus, reducing the amount and thickness of plastics yet retaining its mechanical, aesthetic, barrier and recyclable properties is most sought for.

In view of the above, there is a need for packaging materials with reduced plastics without compromising any of its existing packaging qualities.

### SUMMARY OF THE INVENTION

In an aspect of the present disclosure, there is provided a lamitube sleeve comprising: a) an outer layer and a sealant layer independently comprising at least one nucleated high density polyethylene; and b) a barrier layer disposed between the outer layer and the sealant layer, wherein the lamitube sleeve has a tensile strength @yield of at least 22 MPa.

In another aspect of the present disclosure, there is provided a process of preparing the lamitube sleeve as disclosed herein, the process comprising: a) making multilayer film(s) from nucleated high density polyethylene; b) obtaining a barrier layer; and c) extrusion laminating the layers together, then slitting into reels of desired width in the range of 63 - 320 mm, followed by tubing from the reels.

These and other features, aspects, and advantages of the present subject matter will be better understood with reference to the following detailed description and appended claims. This summary is provided to introduce a selection of concepts in a simplified form. This summary is not intended to identify key features or essential features of the claimed subject matter.

### DETAILED DESCRIPTION OF THE INVENTION

Those skilled in the art will be aware that the present disclosure is subject to variations and modifications other than those specifically described. It is to be understood that the present disclosure includes all such variations and modifications. The disclosure also includes all such steps, features, compositions, and compounds referred to or indicated in this specification, individually or collectively, and any and all combinations of any or more of such steps or features.

### Definitions

For convenience, before further description of the present disclosure, certain terms employed in the specification, and examples are delineated here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only".

Throughout this specification, unless the context requires otherwise the word "comprise" and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

The term "at least one" used herein refers to one or more and thus, includes individual components as well as mixtures/combinations.

The term "lamitube sleeve" used herein refers to sleeve of the lamitube comprising an outer layer and a sealant layer independently comprising at least one nucleated high density polyethylene; and a barrier layer disposed between the outer layer and the sealant layer, wherein the lamitube sleeve has tensile strength @yield of at least 22 MPa and density in a range of 0.941 to 0.990 g/cm³.

The term "polyethylene" as used herein refers to an ethylene polymer having density in a range of 0.833 - 0.990 g/cm³, selected from high density polyethylene, medium density polyethylene, low density polyethylene, linear low density polyethylene or combinations thereof.

The term "high density polyethylene" as used herein refers to polyethylene having a density usually in the range of from about 0.94 g/cm³ to about 0.97 g/cm³. The terms HDPE and high density polyethylene may be interchangeably used. High density polyethylene of the present disclosure may also inherently include a nucleating agent. Examples of such HDPE include but not limited to Elite AT6900 from Dow chemicals, SURPASS HPs167-AB-sHDPE from Nova chemicals or combinations thereof.

The term "medium density polyethylene" as used herein refers to polyethylene having a density usually in the range of from about 0.926 g/cm³ to about 0.941 g/cm³. The term MDPE and medium density polyethylene may be interchangeably used.

The term "low density polyethylene" as used herein refers to polyethylene having a density usually in the range of from about 0.910 g/cm³to about 0.925 g/cm³. The term LDPE and low density polyethylene may be interchangeably used.

The term "linear low density polyethylene" as used herein refers to polyethylene having a density usually in the range of from about 0.910 g/cm³to about 0.930 g/cm³. The term LLDPE and linear low density polyethylene may be interchangeably used.

The melt flow index (MFI) of aforesaid polyethylene may be in the range of 0.2 to 15 g/10min, specifically in the range of 0.2 to 7.0 g/10 min, more specifically 0.2 to 2.0 g/10 min. The MFI is measured as per ASTM D 1238.

The term "nucleating agent" used herein refers to an additive added to a polymer that changes the crystallization behaviour of the polymer. For the purpose of the present disclosure, a nucleating agent is added to high density polyethylene to form nucleated high density polyethylene. Examples of nucleating agents include but are not limited to UltraGuard^{™} Solutions Natural 10036, UltraGuard^{™} Solutions EXP Natural 10385 (Milliken) and so on. High density polyethylene can also be of inherently containing a nucleating agent such as Elite AT6900 from Dow, SURPASS HPs167-AB - sHDPE from Nova Chemicals and so on.

The term "tensile strength @ yield" used herein refers to a material's ability to withstand loads and forces. For the purpose of the present disclosure, the "tensile strength @ yield" of the lamitube sleeve is at least 22 MPa. The tensile properties are measured as per ASTM D 882.

The term "water vapour transmission rate" or "WTR" or "WVTR" used herein refers to amount of water vapour pass or permeate through a material in a specific period of time. For the purpose of the present disclosure, WTR of the lamitube sleeve is measured at 38°C at 90% humidity and is found to be equal to or less than 0.750 g/m².day. The test method is as per ASTM F 1249-20.

Ratios, concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a thickness range of 50 µm to 150 µm should be interpreted to include not only the explicitly recited limits of 60 µm to 130 µm, but also to include sub-ranges, such as 65 µm to 135 µm, 70 µm to 120 µm, and so forth, as well as individual amounts, including fractional amounts, within the specified ranges, such as 65.2 µm, 140.6 µm, and 141.5 µm, for example.

As discussed in the background, there is a requirement for packaging materials with reduced plastics. Accordingly, the present disclosure provides a lamitube sleeve comprising an outer layer and a sealant layer independently comprising nucleated high density polyethylene. Nucleated high density polyethylene is obtained by dispersing nucleating agent with high density polyethylene in order to achieve a polyethylene with higher crystallinity and also evenly sized spherulites. However, such crystalline formations or desired morphology (crystalline structure or spherulite structure) are not observed in the absence of such nucleating agents. Therefore, nucleated polyethylene due to its higher crystalline structure impart improved mechanical properties. Thus, the present disclosure provides a lamitube sleeve comprising an outer layer and a sealant layer independently comprising nucleated high density polyethylene, and a barrier layer disposed between the outer layer and the sealant layer, wherein the lamitube sleeve has a tensile strength @yield of at least 22 MPa. Also, the lamitube sleeve has water vapour transmission rate equal to or less than 0.750 g/m².day at 38°C at 90% humidity.

In an embodiment of the present disclosure, there is provided a lamitube sleeve comprising: a) an outer layer and a sealant layer independently comprising at least one nucleated high density polyethylene; and b) a barrier layer disposed between the outer layer and the sealant layer, wherein the lamitube sleeve has a tensile strength @yield of at least 22 MPa. In another embodiment of the present disclosure, the lamitube sleeve has a tensile strength @yield in a range of 22 to 30 MPa. In one another embodiment of the present disclosure, the lamitube sleeve has a tensile strength @yield in a range of 22 to 25 MPa.

In an embodiment of the present disclosure, there is provided a lamitube sleeve as disclosed herein, the nucleated high density polyethylene comprises high density polyethylene and a nucleating agent. In another embodiment of the present disclosure, the nucleated high density polyethylene comprises a high density polyethylene inherently with a nucleating agent. In one another embodiment of the present disclosure, the nucleated high density polyethylene comprises a high density polyethylene inherently with a nucleating agent such as to Elite AT6900 from Dow, SURPASS HPs167-AB - sHDPE from Nova Chemicals or combinations thereof.

In an embodiment of the present disclosure, there is provided a lamitube sleeve as disclosed herein, wherein the barrier layer is a multilayer comprising at least one barrier component and at least one polyethylene.

In an embodiment of the present disclosure, there is provided a lamitube sleeve as disclosed herein, wherein the polyethylene has density in a range of 0.833 - 0.990 g/cm³. In another embodiment of the present disclosure, the polyethylene has density in a range of 0.870 - 0.990 g/cm³.

In an embodiment of the present disclosure, there is provided a lamitube sleeve as disclosed herein, wherein the barrier component is selected from ethylvinyl alcohol, polyvinyl alcohol, polyamides, polyethylene terephthalate or combinations thereof. In another embodiment of the present disclosure, the barrier component is ethylvinyl alcohol or polyvinyl alcohol.

In an embodiment of the present disclosure, there is provided a lamitube sleeve as disclosed herein, wherein the outer layer comprises one to five layers.

In an embodiment of the present disclosure, there is provided a lamitube sleeve as disclosed herein, wherein the sealant layer comprises one to eleven layers.

In an embodiment of the present disclosure, there is provided a lamitube sleeve as disclosed herein, wherein the barrier layer comprises one or more layers.

In an embodiment of the present disclosure, there is provided a lamitube sleeve as disclosed herein, wherein each of the layer may comprise at least one tie layer.

In an embodiment of the present disclosure, there is provided a lamitube sleeve as disclosed herein, wherein the tie layer comprises a polymeric adhesive selected from the group consisting of maleated polyethylene, anhydride grafted ethylene/1-butene copolymer, anhydride grafted ethylene/1-hexene copolymer, polypropylene, propylene ethylene copolymer, ethylene vinyl acetate copolymer, ethylene methyl acrylate copolymer, and anhydride grafted ethylene/1-octene copolymer.

In an embodiment of the present disclosure, there is provided a lamitube sleeve as disclosed herein, wherein at least one layer of the lamitube sleeve is metallized.

In an embodiment of the present disclosure, there is provided a lamitube sleeve as disclosed herein, wherein the outer layer has a thickness in a range of 50 µm -150 µm.

In an embodiment of the present disclosure, there is provided a lamitube sleeve as disclosed herein, wherein the sealant layer has a thickness in a range of 50 µm -200 µm.

In an embodiment of the present disclosure, there is provided a lamitube sleeve as disclosed herein, wherein the barrier layer has a thickness in a range of 50 µm -150 µm.

In an embodiment of the present disclosure, there is provided a lamitube sleeve as disclosed herein, wherein the nucleating agent is selected from UltraGuard Solutions Natural 10036, or UltraGuard^{™} Solutions EXP Natural 1038. In another embodiment of the present disclosure, the nucleated high density polyethylene is selected from Elite AT6900 from Dow, SURPASS HPs167-AB - sHDPE from Nova Chemicals or combinations thereof.

In an embodiment of the present disclosure, there is provided a lamitube sleeve as disclosed herein, wherein the lamitube sleeve has density in a range of 0.941 to 0.990 g/cm³.

In an embodiment of the present disclosure, there is provided a lamitube sleeve as disclosed herein, wherein the lamitube sleeve has thickness in a range of 150 to 500 µm. In another embodiment of the present disclosure, the lamitube sleeve has thickness in a range of 150 to 250 µm.

In an embodiment of the present disclosure, there is provided a lamitube sleeve as disclosed herein, wherein the lamitube sleeve has water vapour transmission rate equal to or less than 0.750 g/m².day at 38°C at 90% humidity. In another embodiment of the present disclosure, the lamitube sleeve has water vapour transmission rate in a range of 0.250 to 0.750 g/m².day at 38°C at 90% humidity.

In an embodiment of the present disclosure, there is provided a process of preparing the lamitube sleeve as disclosed herein, the process comprising: a) making multilayer film(s) from nucleated high density polyethylene; b) obtaining a barrier layer; and c) extrusion laminating the layers together, then slitting into reels of desired width in the range of 63 mm - 320 mm, followed by tubing from the reels.

In an embodiment of the present disclosure, there is provided a process of preparing the lamitube sleeve as disclosed herein, wherein extrusion laminating the layers together is carried out in the presence of an extrusion lamination layer comprising a high flowing polymer selected from HDPE, LDPE, LLDPE, ethylene-acrylic acid copolymer or combinations thereof. In another embodiment of the present disclosure, the each of the layer of the lamitube sleeve may comprise a tie layer comprising an adhesive selected from polyurethane, maleated polyethylene, anhydride grafted (ethylene/1-butene copolymer, anhydride grafted ethylene/1-hexene copolymer, anhydride grafted polypropylene, anhydride grafted propylene ethylene copolymer), ethylene vinyl acetate copolymer, ethylene methyl acrylate copolymer, anhydride grafted ethylene/1-octene copolymer, or combinations thereof

Although the subject matter has been described in considerable detail with reference to certain examples and implementations thereof, other implementations are possible.

### Examples

The disclosure will now be illustrated with working examples, which is intended to illustrate the working of disclosure and not intended to take restrictively to imply any limitations on the scope of the present disclosure. Unless defined otherwise, all technical and scientific terms used herein have the same meaning as commonly understood to one of ordinary skill in the art to which this disclosure belongs. Although methods and materials similar or equivalent to those described herein can be used in the practice of the disclosed methods and compositions, the exemplary methods, devices and materials are described herein. It is to be understood that this disclosure is not limited to particular methods, and experimental conditions described, as such methods and conditions may apply.

### Example 1

### Process of preparing a lamitube sleeve

The lamitube sleeve of the present disclosure is a multilayer laminate sleeve wherein each of the layers are obtained by blown film extrusion. The layers of the lamitube sleeve include an outer layer, a sealant layer and a barrier layer. The outer layer and the sealant layer independently comprise at least one layer of nucleated polyethylene. The nucleated polyethylene is obtained by mixing a nucleating agent and high density polyethylene and subjecting the composition to blown film extrusion to obtain a layer of nucleated high density polyethylene (Nucleated HDPE). A barrier layer is obtained by blown film extrusion of ethylvinyl alcohol along with tie layers and flanking outer polyethylene layers. The lamitube sleeve is then obtained by extrusion laminating the layers together, then slitting into reels of desired width in the range of 63 - 320 mm, followed by tubing from the reels. The process of film extrusion is a well-known process as discussed in the references [Multilayer Flexible Packaging, 2nd Edition - March 29, 2016, Page 137-145, Editor: John R. Wagner Jr. ELSEVIER]].

The lamitube sleeve of the present disclosure is of below structure: L1- 50 µm (Nucleated HDPE) /20 µm (extrusion lamination layer) /55 µm (PE/ tie/EVOH/ tie/PE) / 20 µm (extrusion lamination layer) / 50 µm (Nucleated HDPE)

The lamitube sleeve includes an outer layer and a sealant layer which are independently nucleated HDPE of thickness 50 µm. The barrier layer comprises is multilayer, wherein a layer of ethylvinyl alcohol is sandwiched between polyethylene in the presence of a tie layer. The outer, sealant and the barrier layers are extruded laminated in the presence of extrusion lamination layer of an (polyurethane) adhesive or high flowing polyethylene to obtain the lamitube sleeve.

For comparative purpose, lamitube sleeve L2 of below structure was prepared by extrusion lamination of layers. L2- 50 µm PE/tie/EVOH tie/PE / 20 µm (extrusion lamination layer) / 50 µm PE/tie/EVOH/tie/PE / 20 µm(extrusion lamination layer) / 70 µm PE.

### Example 2

### Barrier and Mechanical Properties of the lamitube sleeve

Barrier and mechanical properties of the lamitube sleeves L1 and L2 as prepared in Example 1 were measured.

WTR of the lamitube sleeves were measured at 38°C at 90% RH. The test conditions for measuring WTR is provided in Table 1 below and measured WTR values of the lamitube sleeves are shown in Table 2.

| **Test Condition** | **For WTR testing** |
|---|---|
| Standard Used | ASTM F 1249 - 20 |
| Room Temp. | 23 ± 2 °C |
| Test Temp. | 38 ± 0.5 °C |
| Test RH | 90% ± 3% RH |
| Conditioning | 1 Hr |
| Test Area | 50 cm² |
| Machine Model | Permatran 3/34 G |

Mechanical strength of the lamitube sleeves is assessed by determining tensile strength at yield by ASTM D882 and the results are shown in Table 2. Tube burst values of the of the lamitubes comprising the lamitube sleeve of the present disclosure was also measured.

Burst strength refers to the ability of a lamitube to withstand a high pressure for a specified time period. The tube was held by the nozzle in an air-tight manner in a Burst Strength Tester. The ability of the lamitube to withstand the pressure was determined and the results are shown in Table 2.

The burst strength test results showed that the lamitube comprising the lamitube sleeve of the present disclosure had the ability to withstand internal pressure of 3.56 bar without bursting. No cracks, or breakage was found after the experiment which concludes that the lamitube comprising the lamitube sleeve of the present disclosure possessed high burst strength.

**Table 2**

| **Lamitube Sleeve** | **Thickness (µm)** | **Tensile strength @ yield (MPa)** | **WTR (g/m².day) 38°C 90% RH** | **Tube burst strength comprising L1/L2 of lamitube diameter - 22 mm and Length - 75 mm** |
|---|---|---|---|---|
| **L1** | 195 | MD: 22.20 | 0.659 | 3.61 |
| | | TD: 24.12 | | |
| **L2** | 210 | MD: 18.56 | 0.960 | 3.56 |
| | | TD: 19.68 | | |

From Table 2 it could be observed that the lamitube sleeve of the present disclosure exhibited improved barrier and mechanical properties as compared to lamitube comprising L2. Table 2 confirmed that L2 showed higher WTR of 0.960 g/m².day, whereas L1 showed lesser WTR of 0.659 g/m².day confirming the improved barrier properties. This could be attributed to the presence of nucleated HDPE in the outer and the sealant layer in the lamitube sleeve. Thus, presence of nucleated HDPE was critical in achieving the enhanced WTR. Further, it could be seen that L1 had tensile strength @ yield of greater than 22 MPa in both machine direction (MD) and transverse direction (TD) confirmed that the lamitube sleeve (L1) of the present disclosure exhibited increased stiffness and tensile nature, whereas the lamitube sleeve L2 without nucleated HDPE deformed at a lesser force or load.

Further the lamitube comprising L1 of lesser thickness exhibited comparable burst strength value with lamitube sleeve L2, wherein the thickness was higher. However when the thickness of the lamitube sleeve of the present disclosure was increased further the lamitube exhibited increased burst strength. Thus, the lamitube sleeve of the present disclosure comprising the nucleated high density polyethylene at the outer and at the sealant layer showed improved properties besides having reduced thickness of the sleeve.

## Claims

1. A lamitube sleeve comprising:
a) an outer layer and a sealant layer independently comprising at least one nucleated high density polyethylene; and
b) a barrier layer disposed between the outer layer and the sealant layer, wherein the lamitube sleeve has a tensile strength @yield of at least 22 MPa.

2. The lamitube sleeve as claimed in claim 1, wherein the nucleated high density polyethylene comprises high density polyethylene and a nucleating agent.

3. The lamitube sleeve as claimed in claim 1, wherein the barrier layer is a multilayer comprising at least one barrier component and at least one polyethylene.

4. The lamitube sleeve as claimed in claims 1 to 3, wherein the polyethylene has density in a range of 0.833 - 0.990 g/cm³.

5. The lamitube sleeve as claimed in claim 3, wherein the barrier component is selected from ethylvinyl alcohol, polyvinyl alcohol, polyamides, polyethylene terephthalate or combinations thereof.

6. The lamitube sleeve as claimed in claim 1, wherein the outer layer comprises one to five layers.

7. The lamitube sleeve as claimed in claim 1, wherein the sealant layer comprises one to eleven layers.

8. The lamitube sleeve as claimed in claim 1, wherein each of the layers may comprise at least one tie layer.

9. The lamitube sleeve as claimed in claim 8, wherein the tie layer comprises a polymeric adhesive selected from the group consisting of maleated polyethylene, anhydride grafted ethylene/1-butene copolymer, anhydride grafted ethylene/1-hexene copolymer, polypropylene, propylene ethylene copolymer, ethylene vinyl acetate copolymer, ethylene methyl acrylate copolymer, and anhydride grafted ethylene/1-octene copolymer.

10. The lamitube sleeve as claimed in claim 1, wherein the outer layer has a thickness in a range of 50 µm -150 µm.

11. The lamitube sleeve as claimed in claim 1, wherein the sealant layer has a thickness in a range of 50 µm -200 µm.

12. The lamitube sleeve as claimed in claim 1, wherein the barrier layer has a thickness in a range of 50 µm -150 µm.

13. The lamitube sleeve as claimed in claim 1, wherein the lamitube sleeve has density in a range of 0.941 to 0.990 g/cm³.

14. The lamitube sleeve as claimed in claim 1, wherein the lamitube sleeve has water vapour transmission rate equal to or less than 0.750 g/m².day at 38°C at 90% humidity.

15. A process of preparing the lamitube sleeve as claimed in claim 1, the process comprising:
a. making multilayer film (s) from nucleated high density polyethylene;
b. obtaining a barrier layer; and
c. extrusion laminating the layers together, then slitting into reels of desired width in the range of 63 - 320 mm, followed by tubing from the reels.
